# EUROPÄISCHE PATENTSCHRIFT

(11) **EP 1 993 899 B1**
(45) Veröffentlichungstag und Bekanntmachung des Hinweises auf die Patenterteilung: **30.09.2009**
(21) Anmeldenummer: 07704527.6
(22) Anmeldetag: 12.02.2007
(51) Int. Cl.: B62K 5/02

(54) **KURVENNEIGENDES FAHRZEUG, INSBESONDERE DREIRAD**
VEHICLE WHICH CAN TILT IN BENDS, IN PARTICULAR THREE-WHEELED VEHICLE
VEHICULE S'INCLINANT DANS LES VIRAGES, NOTAMMENT TRICYCLE

(30) Priorität: 13.02.2006 DE 102006007613; 28.12.2006 DE 102006062678; 28.12.2006 DE 202006019783 U
(43) Veröffentlichungstag der Anmeldung: 26.11.2008
(73) Patentinhaber: Multi Display Werbeagentur & Werbewerkstatt Günther Wagner, 16321 Bernau (DE)
(72) Erfinder: KIRCHNER, Hubert, 16321 Bernau (DE)
(74) Vertreter: Schneider, Henry
(86) Internationale Anmeldenummer: PCT/EP2007/051350
(87) Internationale Veröffentlichungsnummer: WO 2007/093579

(56) Entgegenhaltungen:
- EP-A1- 1 391 374
- DE-A1- 10 249 616
- RU-C1- 2 140 372
- US-A- 4 993 733
- US-A- 5 536 029
- US-A1- 2003 102 176

## Beschreibung

Die Erfindung betrifft ein kurvenneigendes Fahrzeug, insbesondere ein Dreirad, mit den im Oberbegriff des Anspruches 1 genannten Merkmalen.

Es ist bekannt, Dreiräder vom grundsätzlichen Aufbau her entweder so auszubilden, dass diese ein Einzelrad vorne und zwei parallel auf einer Achse angeordnete Räder hinten oder aber nur ein Hinterrad und zwei vordere, mit Abstand zueinander angeordnete Räder besitzen. Wird dabei von einem Dreirad mit zwei vorderen Rädern und einem Hinterrad ausgegangen, so werden die beiden vorderen Räder mit einer Querstange als Lenker miteinander verbunden. Dabei erfolgt der Antrieb über Pedale, die über eine Kurbel beispielsweise auf ein vorderes Zahnrad wirken, das mit einer Kette sowie mit einem Kettengetriebe verbunden ist und dabei auf das Hinterrad als Antriebsrad wirkt. Die dem Dreirad zugeordnete Sitzschale ist im Wesentlichen in der Mitte zwischen den beiden vorderen Rädern und dem Hinterrad angeordnet und ist dabei dem Rahmen des Dreirades zugeordnet. Als nachteilig hat sich bei dieser Ausbildung der Dreiräder jedoch gezeigt, dass sie oftmals der erforderlichen Sicherheit im Verkehr nicht gerecht werden, da sie beim Durchfahren einer Kurve sich nicht wie ein normales Zweirad in die Kurve legen.

Um die Sicherheit im Verkehr zu gewährleisten, um also ein Neigen des Dreirades beim Durchfahren einer Kurve zu ermöglichen, sind zwar weiterhin die unterschiedlichsten Lösungen bekannt, aber auch diese werden oftmals den Anforderungen ebenfalls nicht gerecht. So sind beispielsweise einem Dreirad für die Kurvenneigung Stellmotore zugeordnet, die vom Fahrer ein- und ausgeschaltet werden müssen. Somit werden zusätzlich Schalter benötigt, die nicht nur das Fahren erschweren, sondern zusammen mit den Stellmotoren zu einer kostenungünstigen, Hilfsenergie benötigenden Konstruktion des Dreirades beitragen. Noch gravierender ist der immer wieder nicht zu vermeidende Zeitverzug vor dem Betätigen der Schalter aber auch zwischen dem Einschalten des Stellmotors und dem Erreichen der jeweils erforderlichen Neigung. Das aber bedeutet, dass auch durch diese Lösung nicht eine optimale Sicherheit im Verkehr gewährleistet wird, wenn die Neigungsbefehle nicht rechtzeitig durch Betätigung des Schalters erteilt werden.

Nun ist darüber hinaus nach der DE-A-102 49 616 auch schon ein Dreirad mit Kurvenneigung bekannt, bei dem neben einer Kurvenneigung insbesondere auch eine waageförmige Pendelfunktion zwischen dem Rahmen des Dreirades und der Bodenfläche erreicht werden soll, indem dadurch die Räder eine gleichmäßige Bodenhaftung und Belastung auch bei unebenen Wegverhältnissen und bei Kurvenfahrten haben, aber hinsichtlich der jeweiligen Neigung des Dreirades, insbesondere der Räder, zwecks Gewährleistung der Sicherheit im Verkehr ist auch dieses Dreirad noch nicht optimal. Das resultiert daraus, dass bei diesem Dreirad die Achse, der zwei mit Abstand zueinander angeordnete Räder zugeordnet sind, einen mittleren geraden Achskörper besitzt, der an seiner einen Seite mit dem einen Achsteil zur Lagerung des diesem zugeordneten Rades nach vorn und auf seiner anderen Seite mit dem zweiten Achsteil zur Lagerung des diesem zugeordneten Rades nach hinten gekröpft ist, so dass diese beiden Räder asymmetrisch parallel versetzt zueinander angeordnet sind. Dabei ist der mittlere Achskörper quer zur Dreiradlängsachse am Rahmen befestigt und schwingend um seine Achse am Rahmen gelagert, indem dieser torsionsgefedert beziehungsweise nur einseitig gummigefedert angeordnet sein kann.

Der Erfindung liegt die Aufgabe zugrunde, ein kurvenneigendes Fahrzeug, insbesondere ein Dreirad, entsprechen dem Oberbegriff des Anspruchs 1 zu schaffen, das sich ohne Hilfsenergie für eine herbeizuführende Kurvenneigung und ohne eine wesentliche Beeinflussung der Geschwindigkeit beim Durchfahren einer Kurve selbsttätig der jeweils zu durchfahrenden Kurve hinsichtlich seiner Neigung anpasst und damit zu einer entscheidend verbesserten Sicherheit im Verkehr beiträgt, wobei gleichzeitig eine waageförmige Pendelfunktion zwischen dem Rahmen des Dreirades und der Bodenfläche zwecks Anpassung an unebene Wegverhältnisse zu gewährleisten ist.

Diese Aufgabe wird erfindungsgemäß durch ein kurvenneigendes Fahrzeug, insbesondere ein Dreirad, mit den in dem Anspruch 1 genannten Merkmalen gelöst. Dadurch, dass die beiden vorderen, mit Abstand zueinander angeordneten Räder und somit auch der Rahmen des Dreirades in Abhängigkeit von der Drehrichtung der Lenksäule proportional und dabei kontinuierlich dem aus dem Drehen der Lenksäule resultierenden Drehwinkel beim Durchfahren einer Kurve neigbar sind, indem einerseits die Lenksäule über eine Spurstange mit dem Achskörper in Verbindung steht, dem über dem Schwenklager eine vorzugsweise oberhalb des Achskörpers angeordnete Multifunktionsachse zugeordnet ist, die gemeinsam mit dem Achskörper und dem Radträger des Rades in Wirkverbindung steht, das in Fahrtrichtung vor der Achse des Achskörpers positioniert ist, und andererseits ein Fixpunkt am Rahmen des Dreirades, der vorzugsweise in Höhe der Tretlageraufnahme ausgebildet ist, über eine zweite Spurstange mit dem Radträger des Rades verbunden ist, das in Fahrtrichtung hinter der Achse des Achskörpers positioniert ist, wobei ein oder beide Radträger schwenkbar mit dem Achskörper in Verbindung stehen, wird erreicht, dass sich das Dreirad ohne Hilfsenergie für eine herbeizuführende Kurvenneigung und ohne wesentliche Beeinflussung der Geschwindigkeit beim Durchfahren einer Kurve selbsttätig der jeweils zu durchfahrenden Kurve hinsichtlich einer individuell wählbaren, einstellbaren Neigung anpasst, so dass das Dreirad zu einer entscheidend verbesserten Sicherheit im Verkehr beiträgt. Die waageförmige Pendelfunktion zwischen dem Rahmen des Dreirades und der Bodenfläche gewährleistet optimal eine Anpassung an unebene Wegverhältnisse.

Nach einer vorteilhaften Ausgestaltung der Erfindung steht die mit dem Achskörper in Verbindung stehende Spurstange über Kugelgelenke mit dem Achskörper und mit einem an der Lenksäule angeordneten Hebel in Verbindung, wobei der Achskörper mit der Multifunktionsachse über die Schwenklager derart in Wirkverbindung steht, dass bei einem Drehen der Lenksäule beim Durchfahren einer Linkskurve der Achskörper auf seiner dem Rad zugerichteten Seite, das in Fahrtrichtung vor der Achse des Achskörpers positioniert ist, nach hinten bewegbar und dabei gleichzeitig nach unten schwenkbar ist, so dass sowohl durch dieses Rad als auch durch den Rahmen eine Neigung nach außen einnehmbar ist, wobei auf der diesem Rad zugerichteten Seite sowohl der Achskörper als auch die Multifunktionsachse mit dem mit der Radachse in Verbindung stehenden Radträger verbunden sind. Dabei erfolgt die Verbindung sowohl des Achskörpers als auch der Multifunktionsachse in Fahrtrichtung vorzugsweise im hinteren Bereich des in Fahrtrichtung hinter der Radachse des Rades verlaufend angeordneten Radträgers, bei einer unmotorisierten Variante.

Damit beim Durchfahren einer Linkskurve bei einem entsprechenden Drehen der Lenksäule eine Bewegung des Achskörpers nach hinten und dabei gleichzeitig ein Schwenken nach unten ermöglicht wird, sind zur Wirkverbindung zwischen dem Achskörper und der Multifunktionsachse vorzugsweise zwei Schwenklager vorgesehen, von denen je ein Schwenklager mit jeweils einem von zwei parallel verlaufenden, den Rahmen des Dreirades in dessen vorderen Bereich bildenden, mit Abstand zueinander angeordneten Rohren verbunden ist, wobei die Schwenklager aus zwei Bauteilen bestehen, von denen das eine fest mit dem Achskörper in Verbindung stehende Bauteil schwenkbar in dem zweiten fest mit der Multifunktionsachse und somit auch fest mit jeweils einem der parallel verlaufenden Rohre des Rahmens des Dreirades verbundenen Bauteil gelagert ist. Aus der Anordnung der Schwenklager resultiert aber auch, dass der Rahmen in diesen ausgestellten Schwenklagern hängend angeordnet ist, so dass bereits ohne Nutzlast und ohne Kraftschlusssperre sich eine Dreiradcharakteristik im Stand ergibt, die im beladenen Zustand das Dreirad immer mehr in seine Vertikale zwingt.

Gemäß einem weiteren Merkmal der Erfindung besteht die mit dem Rahmen des Dreirades in Verbindung stehende Tretlageraufnahme bei oben liegendem Tretlager im Wesentlichen aus vier Streben, die ein Rechteck bildend, ebenfalls mit den beiden parallel verlaufenden, den Rahmen des Dreirades in dessen vorderen Bereich bildenden, mit Abstand zueinander angeordneten Rohren verbunden sind, wobei die beiden Streben, die auf der dem Rad zugerichteten Seite angeordnet sind, das mit seiner Radachse in Fahrtrichtung hinter der Achse des Achskörpers positioniert ist, durch einen Bügel miteinander verbunden sind, der gemäß einer vorteilhaften Ausgestaltung über die zweite, ebenfalls in Kugelgelenken gelagerte Spurstange vorzugsweise im mittleren Bereich des diesem Rad zugeordneten Radträgers mit diesem in Verbindung steht. Selbstverständlich können sich in Abhängigkeit von der Anordnung des Tretlagers auch hiervon abweichende Anordnungen hinsichtlich der in Kugelgelenken gelagerten Spurstangen ergeben.

Ausgehend davon, dass beide Spurstangen in Kugelgelenken gelagert angeordnet sind, ergibt sich zugleich eine relativ einfache beidseitige Lenkung, so dass gleichzeitig bei Dreirädern auch eine optimale Lenkung gewährleistet wird.

Damit beim Durchfahren einer Linkskurve das Rad, dessen Radachse in Fahrtrichtung hinter der Achse des Achskörpers positioniert ist, eine Neigung nach innen einnimmt, steht der Achskörper mit dem diesem Rad zugeordneten Radträger vorne mit diesem in Verbindung, wobei zur Verbindung mit dem Radträger der Achskörper in Fahrtrichtung nach vorne abgekröpft ist, so dass im Zusammenwirken mit der im mittleren Bereich des Radträgers in Verbindung stehenden, in Kugelgelenken gelagerten Spurstange bei einem Drehen der Lenksäule beim Durchfahren einer Linkskurve der aus der Einwirkung der über den Hebel mit der Lenksäule verbundenen, in Kugelgelenken gelagerten Spurstange auf den Achskörper resultierende Bewegungsablauf des Achskörpers durch diesen zusammen mit der zweiten Spurstange auf den Radträger übertragbar ist, der dem Rad zugeordnet ist, das mit seiner Radachse in Fahrtrichtung hinter der Achse des Achskörpers angeordnet ist, so dass durch dieses Rad beim Durchfahren einer Linkskurve eine Neigung nach innen eingenommen wird.

Wird ausgehend von der erfindungsgemäßen Ausbildung des kurvenneigenden Dreirades eine Rechtskurve durchfahren, so versteht sich, dass zur Vornahme der aus der Rechtskurve sich ergebenden Neigung der beiden vorderen, mit Abstand zueinander angeordneten Räder ein entgegengesetzter Bewegungsablauf des Achskörpers in Bezug auf die Multifunktionsachse erfolgt, so dass im Zusammenwirken mit den in den Kugelgelenken gelagerten Spurstangen auch gegenüber der Neigung beim Durchfahren einer Linkskurve eine entgegengesetzte Neigung der Räder erfolgt. Die durch die Erfindung beabsichtigten Wirkungen treten selbstverständlich unabhängig davon ein, welches der beiden mit Abstand zueinander angeordneten Räder in Fahrtrichtung das vor der Achse des Achskörpers positionierte Rad ist. Es kommt aber stets darauf an, dass sowohl das in Fahrtrichtung vor der Achse des Achskörpers positionierte Rad als auch das in Fahrtrichtung hinter der Achse des Achskörpers positionierte Rad sein eigenes ihm zugeordnetes System besitzt, um die proportionale und dabei kontinuierliche Neigung von Rahmen und Rädern beim Drehen der Lenksäule zu ermöglichen, damit eine optimale Lenkgeometrie erreicht wird.

Um bei Einwirkung auf den Achskörper durch die Lenksäule beim Durchfahren einer Kurve eine sichere Führung des Achskörpers bei seinem Bewegungsablauf zu gewährleisten, besitzt der Achskörper im Bereich der Dreiradlängsachse weiterhin ein Scheibensegment, das von einem Spalt aufnehmbar ist, der durch Formgebung eines Bremssattels gebildet ist, der mit den beiden hinteren Streben der Tretlageraufnahme beziehungsweise mit dem Rahmen des Dreirades verbunden ist. Dabei bewirkt der vom Bremssattel des Dreirades stufenlos durch den Handdrehgriff des Dreirades gesteuerte, auf das geschwenkte Scheibensegment der im Wesentlichen durch den Achskörper gebildeten asymmetrischen Pendelachse übertragene Kraftschluss eine schnelle, stufenlos mischbare Dreiradcharakteristik hinsichtlich des Anhaltens und des Abfahrens, ohne dass der Fahrer die Beine auf die Fahrbahn absetzt. Für die Multifunktionsachse und auch für das Einzelrad erfüllt je ein Bremssattel die Funktion einer Flatterbremse.

Ausgehend von dieser Ausbildung des kurvenneigenden Dreirades ist die Lenksäule vorzugsweise im oberen Bereich der Tretlageraufnahme, die in die Herbeiführung der jeweiligen Kurvenneigung einbezogen ist und in dem die vier die Tretlageraufnahme bildenden Streben zusammengeführt sind, drehbar in einem Rohr geführt, während sie vorzugsweise im unteren Bereich der Tretlageraufnahme in einem Lager drehbar angeordnet und dabei gegen Längsverschiebung arretiert ist, das in einem Steg angeordnet ist, der mit den beiden parallel verlaufenden, mit Abstand zueinander angeordneten Rohren des Rahmens des Dreirades verbunden ist. Dabei besitzt die Lenksäule einen Lenkhebel, mit dessen Enden jeweils ein Lenkseil in Verbindung steht, wobei beide Lenkseile mit einem dem Hinterrad zugeordneten Lenkhebel oder ein einseitiges Gestänge in Verbindung stehen und das Hinterrad bei einer Kurvendurchfahrt einen Lenkeinschlag zur Neigung einnimmt, die der der beiden vorderen, mit Abstand zueinander angeordneten Räder entspricht. Die Lenkgeometrie der Multifunktionsachse wird ergänzt.

Unter Berücksichtigung der jeweiligen Kurvendurchfahrt ist das Hinterrad vorteilhafterweise am Rahmen des Dreirades schwenkbar geführt. Ein aus zwei Streben bestehender, schwenkbarer Radträger, zwischen dessen Streben das Hinterrad drehbar angeordnet ist, ist über die beiden Federstreben mit zwei verbindenden Stegen in einem in den Rahmen des Dreirades integrierten Steuerkopf drehbar gelagert. Andere Achsaufhängungen sind möglich.

Mit diesen beiden, durch den Steg verbundenen, den schwenkbaren Radträger bildenden Streben steht auch der dem Hinterrad zugeordnete Lenkhebel in Verbindung.

Alternativ kann der das Hinterrad aufnehmende Radträger aber beispielsweise auch aus einer Doppelbrückengabel beziehungsweise aus einer Federgabel, vorzugsweise in Form eines Teleskops, bestehen. Bei einer motorisierten Variante ist das Antriebsaggregat mit dem Antriebsrad schwenkbar angeordnet.

Um bei der erfindungsgemäßen Ausbildung des Dreirades hinsichtlich der herbeizuführenden Kurvenneigung auf die Sicherheit des Fahrers weiterhin Einfluss zu nehmen, sind vorzugsweise im Bereich der Sitzschale des Dreirades symmetrisch zum Rahmen zwei mit dem Rahmen verbundene Sturzbügel angeordnet, die im Wesentlichen u-förmig ausgebildet sind, wobei deren untere Stege nach außen gerichtet sind. Durch diese Sturzbügel ist gleichzeitig eine dem Rahmen des Dreirades zugeordnete Unterflurlastaufnahme begrenzt, die gemäß einer weiteren zweckmäßigen Ausbildung des Dreirades vorzugsweise unterhalb der Sitzschale angeordnet ist. Die daraus resultierende Nutzlast wird auch genutzt, um stabilisierend auf die Einnahme einer Vertikalposition des Dreirades zu wirken.

Um auch einen robusten Einsatz des erfindungsgemäßen, kurvenneigenden Fahrzeuges, insbesondere des Dreirades, zu gewährleisten, ist weiterhin vorgesehen, mehrere, im Wesentlichen aus dem verschiebbaren und schwenkbaren, mit der Multifunktionsachse in Wirkverbindung stehenden Achskörper bestehende asymmetrische Achsen vorzusehen, die hintereinander angeordnet sind und eine voneinander abweichende Achsgeometrie besitzen. Das gleiche Wirkprinzip lässt sich auf weitere Fahrzeuggruppen, wie beispielsweise Roller, Schlittenfahrzeuge, Renncarts, Rikschas oder dergleichen, anwenden.

Ist die Erfindung bei kurvenneigenden Dreirädern vorgesehen, bei denen die Pedalkurbeln mit ihren Tretlagern in Fahrtrichtung vorne liegen, was beispielsweise dem so genannten Hausfrauenmodell entspricht, so kann weiterhin die relativ große Baulänge des Dreirades auch durch eine Gepäckaufnahme ergänzt werden, die vor der Vorderachse des Dreirades angeordnet ist und dabei mit ihrem Niveau einen besonders geringen Abstand zur Fahrbahn einnimmt.

Schließlich bleibt das Eintreten der durch die Erfindung beabsichtigten Wirkungen auch dann unbeeinflusst, wenn die das Hinterrad aufnehmende, den Radträger bildende Baugruppe, so im Fahrradbau, mit einem Elektroantrieb ausgestattet ist. Analoge Verhältnisse werden auch dann erreicht, wenn ein Verbrennungsmotor oder aber im Schienenbereich ein hydraulischer Antrieb zugeordnet wird. Dabei bleibt das Eintreten der durch die Erfindung beabsichtigten Wirkungen auch dann unbeeinflusst, wenn die Erfindung bei einem kurvenneigenden Dreirad eingesetzt wird, bei dem vorne ein Rad und hinten zwei Räder vorgesehen sind.

Somit wird durch die Erfindung ein kurvenneigendes Fahrzeug, insbesondere ein Dreirad, bereitgestellt, bei dem die asymmetrische, im Wesentlichen aus dem verschiebbaren und schwenkbaren, mit der Multifunktionsachse in Wirkverbindung stehenden Achskörper bestehende Achse, die somit eine Pendelachse ist, durch Schwenken ihre Längenmaße für die einseitig oder doppelseitig geschwenkten Radträger verändert, die ausgehend vom Fixpunkt am Rahmen des Dreirades, der vorzugsweise durch die Tretlageraufnahme gebildet ist, ins richtige Verhältnis gesetzt werden.

Weitere bevorzugte Ausgestaltungen der Erfindung ergeben sich aus den übrigen, in den Unteransprüchen genannten Merkmalen.

Die Erfindung wird nachfolgend an einem Ausführungsbeispiel anhand der zugehörigen Zeichnungen erläutert. Es zeigen:
- Figur 1: eine Draufsicht auf den Rahmen eines kurvenneigenden Dreirades mit dem Rahmen zugeordneten Rädern,
- Figur 2: eine Vorderansicht des Rahmens nach Figur 1 im Bereich des diesem zugeordneten Achskörpers,
- Figur 3: einen Schnitt eines dem Achskörper nach Figur 2 zugeordneten Schwenklagers,
- Figur 4: .eine Draufsicht auf die dem Rahmen nach Figur 1 zugeordnete Tretlageraufnahme mit einem unten liegenden Tretlager,
- Figur 5: eine Draufsicht auf ein dem Achskörper nach Figur 2 zugeordnetes Führungssegment,
- Figur 6: eine prinzipielle Darstellung der Führung der von der Tretlageraufnahme nach Figur 4 aufgenommenen Lenksäule, welche unten aus Gründen der Körpergröße des Fahrers weit verstellbar ist, und
- Figur 7: eine prinzipielle Darstellung der Führung des mit dem Rahmen nach Figur 1 in Verbindung stehenden Hinterrades.

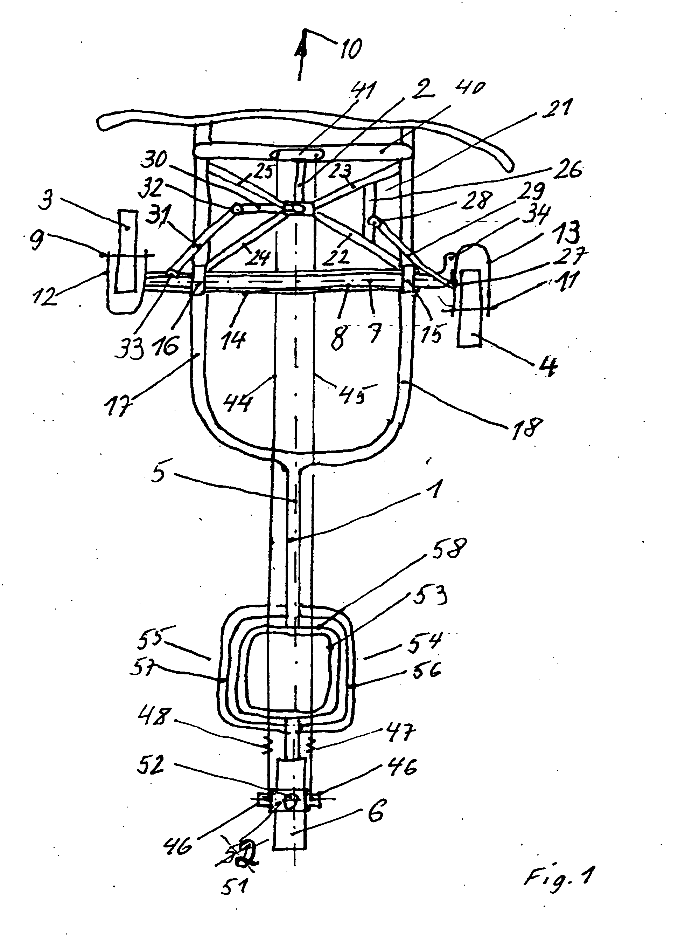

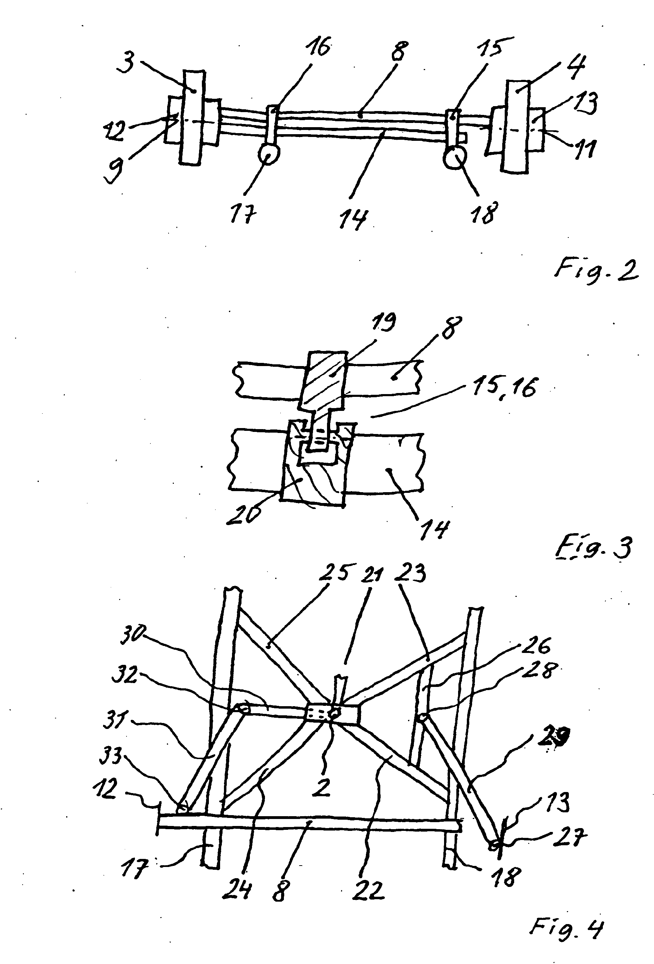

Gemäß Figur 1 sind dem Rahmen 1 eines kurvenneigenden Dreirades zwei vordere, mit Abstand zueinander angeordnete, durch eine Lenksäule 2 lenkbare Räder 3, 4 sowie ein in der Dreiradlängsachse 5 angeordnetes Hinterrad 6 zugeordnet. Dabei sind die beiden vorderen, mit Abstand zueinander angeordneten Räder 3, 4 in Bezug auf die Achse 7 eines Achskörpers 8 asymmetrisch parallel versetzt zueinander angeordnet, woraus resultiert, dass das eine Rad 3 mit seiner Radachse 9 in Fahrtrichtung 10 vor der Achse 7 des Achskörpers 8 und das zweite Rad 4 mit seiner Radachse 11 in Fahrtrichtung 10 hinter der Achse 7 des Achskörpers 8 angeordnet ist. Ausgehend von dieser Anordnung der vorderen Räder 3, 4 besitzen diese jeweils einen Radträger 12, 13 in Form einer Vorderradgabel, in denen die Räder 3, 4 über die Radachsen 9, 11, drehbar gelagert sind. Während der Radträger 12 des Rades 3 mit seiner Radachse 9 in Fahrtrichtung 10 nach hinten verlaufend angeordnet ist, ist der Radträger 13 des Rades 4 mit seiner Radachse 11 in Fahrtrichtung 10 nach vom verlaufend angeordnet. Wie in Verbindung mit Figur 2 aus Figur 1 weiterhin hervorgeht, ist unterhalb des Achskörpers 8 eine Multifunktionsachse 14 vorgesehen, mit der der Achskörper 8 in Wirkverbindung steht, indem dieser über ausgestellte Schwenklager 15, 16 mit der Multifunktionsachse 14 verschiebbar und dabei gleichzeitig schwenkbar verbunden ist. Dabei stehen die Schwenklager 15, 16 mit jeweils einem von zwei parallel verlaufenden, den Rahmen 1 des Dreirades in deren vorderen Bereich bildenden, mit Abstand zueinander angeordneten Rohren 17, 18 in Verbindung. Jedes dieser Schwenklager 15, 16 besteht gemäß Figur 3 aus zwei Bauteilen 19, 20, von denen das eine fest mit dem Achskörper 8 in Verbindung stehende Bauteil 19 schwenkbar in dem zweiten fest mit der Multifunktionsachse 14 verbundenen Bauteil 20 gelagert ist.

Aus Figur 1 gemeinsam mit Figur 4 ist aber auch ersichtlich, dass die Lenksäule 2 einer Tretlageraufnahme 21 zugeordnet ist, die aus vier Streben 22, 23, 24, 25 besteht, die ebenfalls mit den beiden parallel verlaufenden, den Rahmen 1 des Dreirades in dessen vorderen Bereich bildenden, mit Abstand zueinander angeordneten Rohren 17, 18 verbunden sind und dabei ein Rechteck bilden. Dabei sind die beiden Streben 22, 23 durch einen Bügel 26 miteinander verbunden, der über eine in Kugelgelenken 27, 28 gelagerte Spurstange 29 mit dem dem Rad 4 zugeordneten Radträger 13 in dessen mittleren Bereich verbunden ist. Ausgehend davon, dass durch die Tretlageraufnahme 21 auch die Lenksäule 2 aufgenommen wird, besitzt diese einen Hebel 30, der über eine weitere Spurstange 31 mit dem Achskörper 8 verbunden ist, wobei die Verbindung der Spurstange 31 sowohl mit dem Hebel 30 als auch mit dem Achskörper 8 ebenfalls über Kugelgelenke 32, 33 erfolgt. Während mit dem Radträger 12 des Rades 3 sowohl der Achskörper 8 als auch die Multifunktionsachse 14 in Verbindung steht, ist mit dem Radträger 13 des Rades 4 neben der Spurstange 29 zwar auch der Achskörper 8 verbunden, jedoch nicht die Multifunktionsachse 14. Zur Verbindung des Achskörpers 8 mit dem Radträger 13 des Rades 4 ist der Achskörper 8 jedoch in Fahrtrichtung 10 nach vorne abgekröpft.

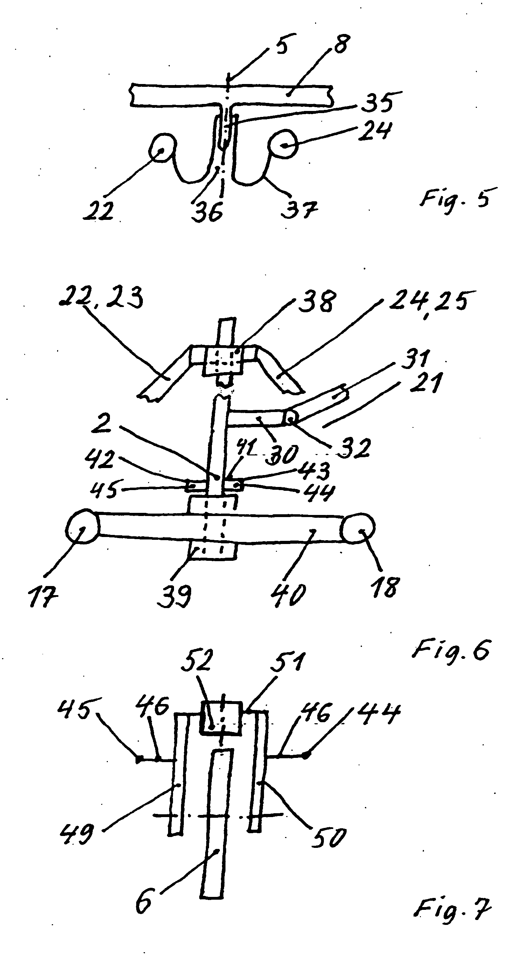

Soll ausgehend von der aus den Figuren 1 bis 4 ersichtlichen Ausbildung beispielsweise eine Linkskurve durchfahren werden, so wird bei einem Drehen der Lenksäule 2 der Achskörper 8 unter Einwirkung des Hebels 30 und damit der Spurstange 31 auf seiner dem Rad 3 zugerichteten Seite nach hinten bewegt und führt dabei gleichzeitig eine nach unten gerichtete Schwenkbewegung aus. Daraus resultiert, dass sowohl das über den Radträger 12 unter der Einwirkung des Achskörpers 8 stehende Rad 3 als auch der Rahmen 1 eine Neigung nach außen einnehmen, wobei die Neigung proportional dem aus dem Drehen der Lenksäule 2 resultierenden Drehwinkel erfolgt und dabei kontinuierlich abläuft. Aus diesem Bewegungsablauf, der aus der Einwirkung der über den Hebel 30 mit der Lenksäule 2 verbundenen Spurstange 31 auf den Achskörper 8 beim Durchfahren einer Linkskurve resultiert, ergibt sich aber auch, dass dieser Bewegungsablauf durch den Achskörper 8 mit seiner Abkröpfung 34 auch auf den unter Einwirkung der Spurstange 29 stehenden Radträger 13 und damit auf das Rad 4 übertragen wird, so dass das Rad 4 beim Durchfahren einer Linkskurve eine Neigung einnimmt, die nach innen gerichtet ist, wobei zwischen dem Rahmen 1 und dem Radträger 13 eine Längenänderung erfolgt. Eine bei den Bewegungsabläufen stets sichere Führung des Achskörpers 8 wird unterstützt, indem - wie Figur 5 zeigt - der Achskörper 8 zusätzlich im Bereich der Dreiradlängsachse 5 ein Scheibensegment 35 besitzt. Dieses wird von einem Spalt 36 aufgenommen, der durch Formung eines Bremssattels 37 gebildet ist, der mit den beiden hinteren Streben 22, 24 der Tretlageraufnahme 21 verbunden ist.

Aus Figur 6 ist ersichtlich, dass die Lenksäule 2, durch deren Drehen ein proportional dem jeweiligen Drehwinkel kontinuierliches Neigen der vorderen Räder 3, 4 eingeleitet wird, in der Tretlageraufnahme 21, die auch den nicht weiter dargestellten, an sich bekannten Antrieb in Form von mit einer Kurbel verbundenen Pedalen aufnimmt, innerhalb eines Rohres 38 geführt ist. Dabei ist die Lenksäule 2 aber auch im unteren Bereich der Tretlageraufnahme 21 in einem Lager 39 drehbar angeordnet, das in einem Steg 40 angeordnet ist, der mit den beiden parallel verlaufenden, mit Abstand zueinander angeordneten Rohren 17, 18 des Rahmens 1 verbunden ist. Das Lager 39 ist gleichzeitig so ausgebildet, dass eine Längsverschiebung der Lenksäule 2 verhindert wird. Die Figur 6 zeigt aber auch, dass die Lenksäule 2 neben dem Hebel 30, der über das Kugelgelenk 32 mit der Spurstange 31 in Verbindung steht, einen Lenkhebel 41 besitzt. Mit dessen Enden 42, 43 ist jeweils ein Lenkseil 44, 45 verbunden, die mit einem dem Hinterrad 6 zugeordneten Lenkhebel 46 über Federkörper 47, 48 in Form von Zugfedern in Verbindung stehen, wie aus den Figuren 1 und 7 hervorgeht. Aus Figur 7 ist aber auch ersichtlich, dass das Hinterrad 6 zwischen zwei den Lenkhebel 46 aufnehmende Streben 49, 50 drehbar angeordnet ist, die auf ihrer nach oben zugerichteten Seite durch einen Steg 51 miteinander verbunden sind, der über einen Steuerkopf 52 drehbar angeordnet ist, wobei der Steuerkopf 52 in den hier nicht weiter dargestellten Rahmen 1 des Dreirades integriert ist. Selbstverständlich ist die drehbare Anordnung des Hinterrades 6 auch unter Verwendung einer Doppelbrückengabel oder einer Federgabel in Form einer Teleskopgabel oder anderen Aufhängungen möglich, was jedoch nicht weiter dargestellt ist.

Schließlich geht in Vervollständigung des Rahmens 1 des kurvenneigenden Dreirades aus Figur 1 aber auch hervor, dass im Bereich der Sitzschale 53 symmetrisch zum Rahmen 1 zwei die Sicherheit des Fahrers erhöhende Sturzbügel 54, 55 angeordnet sind, die mit dem Rahmen 1 verbunden sind. Dabei ist der Steg 56, 57 der Sturzbügel 54, 55, die u-förmig ausgebildet sind, nach außen zugerichtet. Begrenzt wird durch die Sturzbügel 54, 55 eine Unterflurlastaufnahme 58, die unterhalb der Sitzschale 53 angeordnet ist.

### BEZUGSZEICHENLISTE

- 1: Rahmen
- 2: Lenksäule
- 3, 4: vordere Räder
- 5: Dreiradlängsachse
- 6: Hinterrad
- 7: Achse
- 8: Achskörper
- 9,11: Radachsen
- 10: Fahrtrichtung
- 12, 13: Radträger
- 14: Multifunktionsachse
- 15, 16: Schwenklager
- 17,18,38: Rohre
- 19, 20: Bauteile
- 21: Tretlageraufnahme
- 22, 23, 24, 25, 49, 50: Streben
- 26: Bügel
- 27, 28, 32, 33: Kugelgelenke
- 29,31: Spurstangen
- 30: Hebel
- 34: Abkröpfung
- 35: Scheibensegment
- 36: Spalt
- 37: Bremssattel
- 39: Lager
- 40, 51, 56, 57: Stege
- 41, 46: Lenkhebel
- 42,43: Enden
- 44,45: Lenkseile
- 47, 48: Federkörper zum Drehen der Multifunktionsachse
- 52: Steuerkopf
- 53: Sitzschale
- 54, 55: Sturzbügel
- 58: Unterflurlastaufnahme

## Patentansprüche

1. Kurvenneigendes Fahrzeug, insbesondere Dreirad, das ein in der Dreiradlängsachse angeordnetes Hinterrad (6) sowie zwei vordere, mit Abstand zueinander angeordnete, durch einen Lenker unter Zwischenschaltung einer Lenksäule (2) indirekt lenkbare Räder (3,4) besitzt, von denen mindestens ein Rad über einen Kettenantrieb durch Betätigung von an einer mit dem Rahmen (1) des Dreirades in Verbindung stehenden Tretlageraufnahme (21) vorgesehenen Pedalkurbeln antreibbar ist, wobei die beiden vorderen, mit Abstand zueinander angeordneten Räder (3,4) der Achse eines Achskörpers derart zugeordnet sind, dass diese in Bezug auf diese Achse asymmetrisch parallel versetzt zueinander angeordnet sind, so dass das eine Rad mit seiner Radachse in Fahrtrichtung (10) vor der Achse des Achskörpers und das zweite Rad mit seiner Radachse in Fahrtrichtung (10) hinter der Achse des Achskörpers positioniert ist, **dadurch gekennzeichnet, dass** die beiden vorderen, mit Abstand zueinander angeordneten Räder (3, 4) und somit auch der Rahmen (1) des Dreirades in Abhängigkeit von der Drehrichtung der Lenksäule (2) proportional und dabei kontinuierlich dem aus dem Drehen der Lenksäule (2) resultierenden Drehwinkel beim Durchfahren einer Kurve neigbar sind, indem einerseits die Lenksäule (2) über eine Spurstange (31) mit dem Achskörper (8) in Verbindung steht, dem über dem Schwenklager (15, 16) eine vorzugsweise oberhalb des Achskörpers (8) angeordnete Multifunktionsachse (14) zugeordnet ist, die gemeinsam mit dem Achskörper (8) und dem Radträger (12) des Rades (3) in Wirkverbindung steht, das in Fahrtrichtung (10) vor der Achse (7) des Achskörpers (8) positioniert ist, und andererseits ein Fixpunkt am Rahmen (1) des Dreirades, der vorzugsweise in Nähe der Tretlageraufnahme (21) ausgebildet ist, über eine zweite Spurstange (29) mit dem Radträger (13) des Rades (4) verbunden ist, das in Fahrtrichtung (10) hinter der Achse (7) des Achskörpers (8) positioniert ist, wobei ein oder beide Radträger (12,13) schwenkbar mit dem Achskörper (8) in Verbindung stehen.

2. Kurvenneigendes Fahrzeug, insbesondere Dreirad, nach Anspruch 1, **dadurch gekennzeichnet, dass** die mit dem Achskörper (8) in Wirkverbindung stehende Spurstange (31) über Kugelgelenke (32, 33) mit dem Achskörper (8) und mit einem an der Lenksäule (2) angeordneten Hebel (30) in Verbindung steht, wobei der Achskörper (8) mit der Multifunktionsachse (14) über die Schwenklager (15,16) derart in Wirkverbindung steht, dass bei einem Drehen der Lenksäule (2) beim Durchfahren einer Linkskurve der Achskörper (8) auf-seiner dem Rad (3) zugerichteten Seite, das in Fahrtrichtung (10) vor der Achse (7) des Achskörpers (8) positioniert ist, nach hinten bewegbar und dabei gleichzeitig nach unten schwenkbar ist, so dass sowohl durch dieses Rad (3) als auch durch den Rahmen (1) eine Neigung nach außen einnehmbar ist, wobei auf der diesem Rad (3) zugerichteten Seite sowohl der Achskörper (8) als auch die Multifunktionsachse (14) mit dem mit der Radachse (9) in Verbindung stehenden Radträger (12) verbunden sind.

3. Kurvenneigendes Fahrzeug, insbesondere Dreirad, nach Anspruch 2, **dadurch gekennzeichnet, dass** sowohl der Achskörper (8) als auch die Multifunktionsachse (14) in Fahrtrichtung (10) vorzugsweise im hinteren Bereich des in Fahrtrichtung (10) hinter der Radachse (9) des Rades (3) verlaufend angeordneten Radträgers (12) mit diesem in Verbindung stehen.

4. Kurvenneigendes Fahrzeug, insbesondere Dreirad, nach Anspruch 3, **dadurch gekennzeichnet, dass** zur Wirkverbindung zwischen dem Achskörper (8) und der Multifunktionsachse (14) vorzugsweise zwei Schwenklager (15,16) vorgesehen sind, von denen je ein Schwenklager (15,16) mit jeweils einem von zwei parallel verlaufenden, den Rahmen (1) des Dreirades in dessen vorderen Bereich bildenden, mit Abstand zueinander angeordneten Rohren (17,18) verbunden ist, wobei die Schwenklager (16,17) aus zwei Bauteilen (19,20) bestehen, von denen das eine fest mit dem Achskörper (8) in Verbindung stehende Bauteil (19) schwenkbar in dem zweiten fest mit der Multifunktionsachse (14) verbundenen Bauteil (20) gelagert ist.

5. Kurvenneigendes Fahrzeug, insbesondere Dreirad, nach Anspruch 4, **dadurch gekennzeichnet, dass** die mit dem Rahmen (1) des Dreirades in Verbindung stehende Tretlageraufnahme (21) im Wesentlichen aus vier Streben (22,23,24,25) besteht, die ein Rechteck bildend, ebenfalls mit den beiden parallel verlaufenden, den Rahmen (1) des Dreirades in dessen vorderen Bereich bildenden, mit Abstand zueinander angeordneten Rohren (17,18) verbunden sind, wobei die beiden Streben (22,23), die auf der dem Rad (4) zugerichteten Seite angeordnet sind, das mit seiner Radachse (11) in Fahrtrichtung (10) hinter der Achse (7) des Achskörpers (8) positioniert ist, durch einen Bügel (26) miteinander verbunden sind, der über die zweite, ebenfalls in Kugelgelenken (27,28) gelagerte Spurstange (29) mit dem diesem Rad (4) zugeordneten Radträger (13) verbunden ist.

6. Kurvenneigendes Fahrzeug, insbesondere Dreirad, nach Anspruch 5, **dadurch gekennzeichnet, dass** die in Kugelgelenken (27,28) gelagerte Spurstange (29) vorzugsweise im mittleren Bereich des Radträgers (13) mit diesem in Verbindung steht.

7. Kurvenneigendes Fahrzeug, insbesondere Dreirad, nach Anspruch 6, **dadurch gekennzeichnet, dass** der Achskörper (8) mit dem Radträger (13) des Rades (4), dessen Radachse (11) in Fahrtrichtung (10) hinter der Achse (7) des Achskörpers (8) positioniert ist, vorne mit dem Radträger (13) in Verbindung steht, wobei zur Verbindung mit dem Radträger (13) der Achskörper (8) in Fahrtrichtung (10) nach vorne abgekröpft ist, so dass im Zusammenwirken mit der im mittleren Bereich des Radträgers (13) in Verbindung stehenden, in Kugelgelenken (27,28) gelagerten Spurstange (29) bei einem Drehen der Lenksäule (2) beim Durchfahren einer Linkskurve der aus der Einwirkung der über den Hebel (3) mit der Lenksäule (2) verbundenen, in Kugelgelenken (32,33) gelagerten Spurstange (31) auf den Achskörper (8) resultierende Bewegungsablauf des Achskörpers (8) durch diesen zusammen mit der zweiten Spurstange (29) auf den Radträger (13) übertragbar ist, der dem Rad (4) zugeordnet ist, das mit seiner Radachse (11) in Fahrtrichtung (1) hinter der Achse (7) des Achskörpers (8) angeordnet ist, so dass durch dieses Rad (4) beim Durchfahren einer Linkskurve eine Neigung nach innen einnehmbar ist.

8. Kurvenneigendes Fahrzeug, insbesondere Dreirad, nach Anspruch 7, **dadurch gekennzeichnet, dass** der Achskörper (8) im Bereich der Dreiradlängsachse (5) ein Scheibensegment (35) besitzt, das von einem Spalt (36) aufnehmbar ist, der durch Formgebung eines Bremssattels (37) gebildet ist, der mit den beiden hinteren Streben (22,24) des Tretlagerbockes (21) beziehungsweise mit dem Rahmen (1) des Dreirades verbunden ist.

9. Kurvenneigendes Fahrzeug, insbesondere Dreirad, nach Anspruch 8, **dadurch gekennzeichnet, dass** die Lenksäule (2) vorzugsweise im oberen Bereich der Tretlageraufnahme (21), in dem die vier die Tretlageraufnahme (21) bildenden Streben (22,23,24,25) zusammengeführt sind, drehbar in einem Rohr (3) geführt ist, während sie vorzugsweise im unteren Bereich der Tretlageraufnahme (21) in einem Lager (39) drehbar angeordnet und dabei gegen eine Längsverschiebung arretiert ist, das in einem Steg (40) angeordnet ist, der mit den beiden parallel verlaufenden, mit Abstand zueinander angeordneten Rohren (17,18) des Rahmens (1) des Dreirades verbunden ist.

10. Kurvenneigendes Fahrzeug, insbesondere Dreirad, nach Anspruch 9, **dadurch gekennzeichnet, dass** die Lenksäule (2) einen Lenkhebel (41) besitzt, mit dessen Enden (42,43) jeweils ein Lenkseil (44,45) in Verbindung steht, wobei beide Lenkseile (44,45) mit einem dem Hinterrad (6) zugeordneten Lenkhebel (46) in Verbindung stehen und das Hinterrad (6) bei einer Kurvendurchfahrt ebenfalls einen Lenkanschlag zur Neigung einnimmt, die der der beiden vorderen, mit Abstand zueinander angeordneten Räder (3,4) entspricht.

11. Kurvenneigendes Fahrzeug, insbesondere Dreirad, nach Anspruch 10, **dadurch gekennzeichnet, dass** das Hinterrad (6) entsprechend einer Kurvendurchfahrt schwenkbar am Rahmen (1) des Dreirades geführt ist, wobei ein aus zwei Streben (49, 50) bestehender, schwenkbarer Radträger, zwischen dessen Streben (49,50) das Hinterrad (6) drehbar angeordnet ist, über einen die beiden Streben (49,50) auf ihrer nach oben zugerichteten Seite verbindenden Steg (51) in einem in den Rahmen (1) des Dreirades integrierten Steuerkopf (52) drehbar angeordnet ist.

12. Kurvenneigendes Fahrzeug, insbesondere Dreirad, nach Anspruch 11, **dadurch gekennzeichnet, dass** der dem Hinterrad (6) zugeordnete Lenkhebel (46) mit den beiden durch den Steg, die Seile oder Gestänge (51) verbundenen, den schwenkbaren Radträger bildenden Streben (49,50) in Verbindung steht.

13. Kurvenneigendes Fahrzeug, insbesondere Dreirad, nach einem oder mehreren der vorhergehenden Ansprüche, **dadurch gekennzeichnet, dass** der das Hinterrad (6) drehbar aufnehmende Radträger aus einer Doppelbrückengabel beziehungsweise aus einer Federgabel, vorzugsweise in Form eines Federkörpers, besteht.

14. Kurvenneigendes Fahrzeug, insbesondere Dreirad, nach einem oder mehreren der vorhergehenden Ansprüche, **dadurch gekennzeichnet, dass** vorzugsweise im Bereich der Sitzschale (53) des Dreirades symmetrisch zum Rahmen (1) zwei mit dem Rahmen (1) verbundene Sturzbügel (54,55) angeordnet sind, die im Wesentlichen u-förmig ausgebildet sind, wobei deren Steg (56,57) nach außen zugerichtet ist.

15. Kurvenneigendes Fahrzeug, insbesondere Dreirad, nach Anspruch 14, **dadurch gekennzeichnet, dass** der Rahmen (1) des Dreirades eine Unterflurlastaufnahme (58) besitzt, die vorzugsweise unterhalb der Sitzschale (53) angeordnet ist und dabei durch die Sturzbügel (54,55) begrenzt ist.

16. Kurvenneigendes Fahrzeug, insbesondere Dreirad, nach einem oder mehreren der vorhergehenden Ansprüche, **dadurch gekennzeichnet, dass** mehrere, im Wesentlichen aus dem verschiebbaren und schwenkbaren, mit der Multifunktionsachse (14) in Verbindung stehenden Achskörper (8) bestehende Achsen vorgesehen sind, die hintereinander angeordnet sind und eine voneinander abweichende Achsgeometrie besitzen.

17. Kurvenneigendes Fahrzeug, insbesondere Dreirad, nach einem oder mehreren der vorhergehenden Ansprüche, **dadurch gekennzeichnet, dass** bei unten angeordneten, in Fahrtrichtung (10) vorne liegenden Pedalkurbeln mit ihren Tretiagern die relativ große Baulänge des Dreirades durch eine Gepäckaufnahme beziehungsweise einen Kindersitz hinter dem Fahrer ergänzt ist, die/der vor der Vorderachse des Dreirades angeordnet ist und dabei mit ihrem/seinem Niveau einen relativ geringen Abstand zur Fahrbahn einnimmt.

## Claims

1. Vehicle which can tilt in turns, in particular tricycle, comprising a rear wheel (6) which is arranged in the longitudinal axis of the three-wheeled vehicle as well as two spaced front wheels (3, 4) which can be steered indirectly by a steering element via an intermediate steering column (2), wherein at least one wheel can be driven via a chain drive by operating pedals provided on a bottom bracket ball bearing receptacle (21) connected to the frame (1) of the tricycle, wherein the two spaced front wheels (3, 4) are associated with the axis of an axle element in such a way that these are offset with respect to one another relative to this axis, so that the one wheel with its wheel axle is positioned in front of the axis of the axle element in the travel direction (10) and the second wheel is positioned with its wheel axle after the axis of the axle element in the travel direction (10), **characterized in that** the two spaced front wheels (3, 4) and therefore also the frame (1) of the tricycle can be tilted depending on the rotation direction of the steering column (2) proportionally and thereby continually in response to the rotation angle resulting from the rotation of the steering column (2) when moving through a turn, **in that** the steering column (2) is, on one hand, connected with the axle element (8) via a connecting rod (31), with a multifunctional axle (14) positioned above the pivot bearing (15, 16) and associated with the axle element (8) and arranged preferably above the axle element (8), which multifunctional axle (14) is operatively connected together with the axle element (8) and the wheel support (12) of the wheel (3) that is positioned in the travel direction (10) in front of the axle (7) of the axle element (8), and **in that** on the other hand, a fixed point on the frame (1) of the tricycle, which is preferably formed proximate of the bottom bracket ball bearing receptacle (21), is connected via a second connecting rod (29) with the wheel support (13) of the wheel (4) that is positioned in the travel direction (10) after the axle (7) of the axle element (8), wherein one or both wheel supports (12, 13) are pivotally connected with the axle element (8).

2. Vehicle which can tilt in turns, in particular tricycle, according to claim 1, **characterized in that** the connecting rod which is operatively connected to the axle element (8) is connected via ball and socket joints (32, 33) with the axle element (8) and with a lever (30) arranged on the steering column (2), wherein the axle element (8) is operatively connected with the multifunctional axle (14) via the pivot bearings (15, 16), so that during a rotation of the steering column (2) when driving through a left turn, the axle element (8) on the side facing the wheel (3) that is positioned in front of the axis (7) of the axle element (8) in the travel direction (10), can move rearward and simultaneously pivot downward, so that an outward tilt can be attained both with this wheel (3) and with the frame (1), wherein on the side facing the wheel (3) both the axle element (8) and also the multifunctional axle (14) are connected with the wheel support (12) that is connected with the wheel axle (9).

3. Vehicle which can tilt in turns, in particular tricycle, according to claim 2, **characterized in that** both the axle element (8) and the multifunctional axle (14) are connected with respect to the travel direction (10) with rear region of the wheel support (12) that is arranged in the travel direction (10) behind the wheel axle (9) of the wheel (3).

4. Vehicle which can tilt in turns, in particular tricycle, according to claim 3, **characterized in that** two pivot bearings (15, 16) are preferably provided for operatively connecting the axle element (8) and the multifunctional axle (14), wherein each of the pivot bearings (15, 16) is connected in one-to-one correspondence with a respective one of two spaced parallel tubes (17, 18) which form the forward region of the frame (1) of the tricycle, wherein the pivot bearings (16, 17) are made from two components (19, 20), of which a first component (19) fixedly connected with the axle element (8) is pivotally supported in the second component (20) that is fixedly connected with the multifunctional axle (14).

5. Vehicle which can tilt in turns, in particular tricycle, according to claim 4, **characterized in that** the bottom bracket ball bearing receptacle (21) connected to the frame (1) of the tricycle is essentially made of four struts (22, 23, 24, 25) forming a rectangle and is also connected with the two spaced parallel tubes (17, 18) which form the forward region of the frame (1) of the tricycle, wherein the two struts (22, 23) which are arranged on the side facing the wheel (4) that is positioned with its wheel axle (11) in the travel direction (10) behind the axle (7) of the axle element (8), are connected with one another by a clamp (26) that is connected with the wheel support (13) associated with this wheel (4) via the second connecting rod (29) which is also supported in ball and socket joints (27, 28).

6. Vehicle which can tilt in turns, in particular tricycle, according to claim 5, **characterized in that** the connecting rod (29) supported in ball and socket joints (27, 28) is connected with the wheel support (13) preferably in the center region of the wheel support (13).

7. Vehicle which can tilt in turns, in particular tricycle, according to claim 6, **characterized in that** the axle element (8) with the wheel support (13) of the wheel (4), whose wheel axle (11) is positioned in the travel direction (10) after the axis (7) of the axle element (8), is connected in the front with the wheel support (13), wherein for forming a connection with the wheel support (13) the axle element (8) is bent forward in the travel direction (10), so that in cooperation with the connecting rod (29), which is connected in the center region of the wheel support (13) and supported in ball and socket joints (27, 28), during a rotation of the steering column (2) when driving through a left turn, the resulting movement of the axle element (8) stemming from the operation of the connecting rod (31), which is connected with the steering column (2) by the lever (3) and supported in ball and socket joints (32, 33), on the axle element (8) can be transmitted by the axle body (8) in conjunction with the second connecting rod (29) to the wheel support (13) that is associated with the wheel (4) positioned with its wheel axle (8) in the travel direction (1) after the axle (7) of the axle element (8), so that an inward tilt can be attained with this wheel (4) when driving through a left turn.

8. Vehicle which can tilt in turns, in particular tricycle, according to claim 7, **characterized in that** the axle element (8) has in the region of the longitudinal axle (5) of the tricycle a disk segment (35) which can be received by a slot (36) which is formed as a caliper (37) that is connected with the two rearward struts (22, 24) of the bottom bracket ball bearing receptacle (21) and the frame (1), respectively, of the tricycle.

9. Vehicle which can tilt in turns, in particular tricycle, according to claim 8, **characterized in that** the steering column (2) is rotatably guided in a tube (3) in the upper region of the bottom bracket ball bearing receptacle (21) where the struts (22,23, 24, 25) that form the bottom bracket ball bearing receptacle (21) merge, whereas the steering column (2) is preferably rotatably arranged in the lower region of the bottom bracket ball bearing receptacle (21) in a bearing (39) and fixed against longitudinal movement, which bearing (39) is arranged in a web (40) that is connected with the two spaced parallel tubes (17, 18) of the frame (1) of the tricycle.

10. Vehicle which can tilt in turns, in particular tricycle, according to claim 9, **characterized in that** the steering column (2) has a steering lever (41) with two ends (42, 43) which are each connected with a respective steering cable (44, 45), wherein both steering cables (44, 45) are connected with a steering lever (46) associated with the rear wheel (6) and wherein, when driving through a turn, the rear wheel (6) also attains a steering stop with respect to the tilt which corresponds to the tilt of the two spaced front wheels (3, 4).

11. Vehicle which can tilt in turns, in particular tricycle, according to claim 10, **characterized in that** the rear wheel (6) is pivotally supported on the frame (1) of the tricycle to adapt to driving through a turn, wherein a tiltable wheel support made of two struts (49, 50) between which the rear wheel (6) is arranged for a rotation, is rotatably arranged in a control head (52) integrated in the frame (1) of the tricycle by way of a web (51) which connects the two struts (49, 50) at their top sides.

12. Vehicle which can tilt in turns, in particular tricycle, according to claim 11, **characterized in that** the steering lever (46) associated with the rear wheel (6) is connected with the two struts (49, 50) which are connected by the web, the cables or linkage (51) and form the tiltable wheel support.

13. Vehicle which can tilt in turns, in particular tricycle, according to one or several of the preceding claims, **characterized in that** the wheel support which rotatably receives the rear wheel (6) is made of a double-bridge fork and/or a spring fork, preferably in the form of a spring element.

14. Vehicle which can tilt in turns, in particular tricycle, according to one or several of the preceding claims, **characterized in that** two roll bars (54, 55) are preferably connected to the frame (1) and arranged symmetrically with respect to the frame (1) in the region of the seat (53) of the tricycle, with the two roll bars (54, 55) having substantially a U-shape, wherein their web (56, 57 oriented outwardly.

15. Vehicle which can tilt in turns, in particular tricycle, according to claim 14, **characterized in that** the frame (1) of the tricycle has an underfloor load receptacle (58), which is preferably arranged underneath the seat (53) and bounded by the roll bars (54, 55).

16. Vehicle which can tilt in turns, in particular tricycle, according to one or several of the preceding claims, **characterized in that** several axle elements (8) are provided which are movable and tiltable and connected with the multifunctional axle (14), which are sequentially arranged and have different axle geometries.

17. Vehicle which can tilt in turns, in particular tricycle, according to one or several of the preceding claims, **characterized in that,** when the pedal cranks with their bottom bracket ball bearings are arranged in the front in relation to the travel direction (10), the substantial overall length of the tricycle is extended by a luggage receptacle and/or a child seat behind the driver, which is arranged in front of the front axle of the tricycle and has a relatively small spacing from the road surface.

## Revendications

1. Véhicule s'inclinant dans les virages, en particulier un tricycle, qui possède une roue arrière (6) disposée dans l'axe longitudinal du tricycle ainsi que deux roues (3, 4) avant, disposées à distance l'une de l'autre, pouvant être dirigées indirectement par un guidon avec montage intermédiaire d'une colonne de direction (2), au moins une de ces roues arrière pouvant être entraînée par le biais d'un entraînement à chaîne par l'actionnement de manivelles à pédale prévues sur un logement de palier du pédalier (21) en liaison avec le cadre (1) du tricycle, les deux roues (3, 4) avant, disposées à distance l'une de l'autre, de l'essieu d'un corps d'essieu étant affectées de sorte qu'elles sont disposées de façon décalée et asymétrique parallèlement à cet essieu de sorte qu'une roue est positionnée avec son axe de roue devant l'essieu du corps d'essieu, dans le sens de la marche (10), et la deuxième roue est positionnée avec son axe de roue derrière l'essieu du corps d'essieu, dans le sens de la marche (10), **caractérisé en ce que** les deux roues (3, 4) avant, disposées à distance l'une de l'autre, et donc également le cadre (1) du tricycle peuvent s'incliner lors du franchissement d'un virage en fonction du sens de rotation de la colonne de direction (2) de façon proportionnelle, et en l'occurrence continue, à l'angle de rotation résultant de la rotation de la colonne de direction (2), par le fait que, d'une part, la colonne de direction (2) est en liaison, via une barre d'accouplement (31), avec le corps d'essieu (8) auquel est affecté, via le palier pivotant (15, 16), un axe multifonction (14) disposé de préférence au-dessus du corps d'essieu (8) , axe multifonction qui est en relation opératoire commune avec le corps d'essieu (8) et le support de roue (12) de la roue (3) qui est positionnée, dans le sens de la marche (10), devant l'essieu (7) du corps d'essieu (8) et, d'autre part, un point fixe sur le cadre (1) du tricycle, qui est de préférence constitué à proximité du logement de palier de pédalier (21), est relié via une deuxième barre d'accouplement (29) au support de roue (13) de la roue (4) qui est positionnée, dans le sens de la marche (10), derrière l'essieu (7) du corps d'essieu (8), un support de roue ou les deux (12, 13) étant en liaison pivotante avec le corps d'essieu (8).

2. Véhicule s'inclinant dans les virages, en particulier un tricycle, selon la revendication 1, **caractérisé en ce que** la barre d'accouplement (31) en relation opératoire avec le corps d'essieu (8) est, par le biais d'articulations sphériques (32, 33), en liaison avec le corps d'essieu (8) et avec un levier (30) disposé sur la colonne de direction (2), le corps d'essieu (8) étant, par le biais des paliers pivotants (15, 16), en relation opératoire avec l'axe multifonction (14) de sorte que, lors d'une rotation de la colonne de direction (2) lors du franchissement d'un virage à gauche, le corps d'essieu (8) peut être déplacé vers l'arrière sur son côté dirigé vers la roue (3) qui est positionnée, dans le sens de la marche (10), devant l'essieu (7) du corps d'essieu (8) et peut en l'occurrence pivoter simultanément vers la bas de sorte que, aussi bien sous l'action de cette roue (3) que sous l'action du cadre (1), une inclinaison vers l'extérieur peut être réalisée, aussi bien le corps d'essieu (8) que l'axe multifonction (14), sur le côté dirigé vers cette roue (3), étant raccordés avec le support de roue (12) en liaison avec l'axe de roue (9).

3. Véhicule s'inclinant dans les virages, en particulier un tricycle, selon la revendication 2, **caractérisé en ce que** aussi bien le corps d'essieu (8) que l'axe multifonction (14), dans le sens de la marche (10), de préférence dans la zone arrière du support de roue (12) disposé, dans le sens de la marche (10), derrière l'axe de roue (9) de la roue (3), sont en liaison avec celui-ci.

4. Véhicule s'inclinant dans les virages, en particulier un tricycle, selon la revendication 3, **caractérisé en ce que,** pour la relation opératoire entre le corps d'essieu (8) et l'axe multifonction (14), de préférence deux paliers pivotants (15, 16) sont prévus, chaque palier pivotant (15, 16) étant raccordé respectivement à un tube parmi deux tubes (17, 18) disposés à distance l'un de l'autre, parallèlement, formant le cadre (1) du tricycle dans sa zone avant, les paliers pivotants (16, 17) étant composés de deux composants (19, 20) dont l'un, (19) en liaison de façon fixe avec le corps d'essieu (8), repose de façon pivotante dans le deuxième composant (20) raccordé de façon fixe à l'axe multifonction (14).

5. Véhicule s'inclinant dans les virages, en particulier un tricycle, selon la revendication 4, **caractérisé en ce que** le logement de palier du pédalier (21) en liaison avec le cadre (1) du tricycle se compose essentiellement de quatre jambes (22, 23, 24, 25) qui, formant un rectangle, sont également raccordées aux deux tubes (17, 18) disposés à distance l'un de l'autre parallèlement et formant le cadre (1) du tricycle dans sa zone avant, les deux jambes (22, 23) qui sont disposées sur le côté dirigé vers la roue (4) qui, dans le sens de la marche (10), est positionnée avec son axe de roue (11) derrière l'essieu (7) du corps d'essieu (8), étant raccordées l'une à l'autre par un étrier (26) qui est raccordé, par le biais de la deuxième barre d'accouplement (29) reposant également dans des articulations sphériques (27, 28), au support de roue (13) affecté à cette roue (4).

6. Véhicule s'inclinant dans les virages, en particulier un tricycle, selon la revendication 5, **caractérisé en ce que** la deuxième barre d'accouplement (29) reposant dans des articulations sphériques (27, 28) est de préférence en liaison avec le support de roue (13) dans la zone médiane de ce dernier.

7. Véhicule s'inclinant dans les virages, en particulier un tricycle, selon la revendication 6, **caractérisé en ce que** le corps d'essieu (8) est en liaison à l'avant avec le support de roue (13) de la roue (4) dont l'axe de roue (11) est, dans le sens de la marche (10), positionné derrière l'essieu (7) du corps d'essieu (8), le corps d'essieu (8) étant, pour la liaison avec le support de roue (13), coudé vers l'avant, dans le sens de la marche (10), de sorte que, en interaction avec la barre d'accouplement (29) supportée dans des articulations sphériques (27, 28) en liaison dans la zone médiane du support de roue (13), lors d'une rotation de la colonne de direction (2) lors du franchissement d'une virage à gauche, le déroulement du mouvement du corps d'essieu (8) résultant de l'action sur le corps d'essieu (8) de la barre d'accouplement (31) reposant dans des articulations sphériques (32, 33) et reliée à la colonne de direction (2) par le biais du levier (3) peut être transmis par ce corps d'essieu (8) en même temps qu'avec la deuxième barre d'accouplement (29) au support de roue (13) qui est affecté à la roue (4) qui, avec son axe de roue (11), est disposée, dans le sens de la marche (10), derrière l'essieu (7) du corps d'essieu (8) de sorte que, sous l'action de cette roue (4) une inclinaison vers l'intérieur peut être réalisée lors du franchissement d'un virage à gauche.

8. Véhicule s'inclinant dans les virages, en particulier un tricycle, selon la revendication 7, **caractérisé en ce que** le corps d'essieu (8), dans la zone de l'axe longitudinal (5) du tricycle, possède un segment de disque (35) qui peut être reçu par un interstice (36) qui est formé par le façonnage d'un étrier de frein (37) qui est raccordé aux deux jambes arrière (22, 24) du support de palier de pédalier (21) ou au cadre (1) du tricycle.

9. Véhicule s'inclinant dans les virages, en particulier un tricycle, selon la revendication 8, **caractérisé en ce que** la colonne de direction (2), de préférence dans la zone supérieure du logement de palier de pédalier (21) dans laquelle les quatre jambes (22, 23, 24, 25) formant le logement de palier de pédalier (21) sont réunies, est guidée en rotation dans un tube (3) tandis que, de préférence dans la zone inférieure du logement de palier de pédalier (21), elle est disposée en rotation dans un palier (39) et en l'occurrence bloquée contre un déplacement longitudinal, palier qui est disposé dans une entretoise (40) qui est raccordée aux deux tubes (17, 18) du cadre (1) du tricycle qui sont disposés parallèlement et à distance l'un de l'autre.

10. Véhicule s'inclinant dans les virages, en particulier un tricycle, selon la revendication 9, **caractérisé en ce que** la colonne de direction (2) possède un levier de commande de direction (41) avec chacune des extrémités (42, 43) duquel un câble de direction (44, 45) respectivement est en liaison, les deux câbles de direction (44, 45) étant en relation avec un levier de commande de direction (46) affecté à la roue arrière (6), et la roue arrière (6) adoptant également, lors du franchissement d'un virage, une butée de direction pour l'inclinaison qui correspond à l'inclinaison des deux roues (3, 4) avant disposées à distance l'une de l'autre.

11. Véhicule s'inclinant dans les virages, en particulier un tricycle, selon la revendication 10, **caractérisé en ce que** la roue arrière (6) est guidée en pivotement sur le cadre (1) du tricycle en fonction d'un franchissement d'un virage, un support de roue pivotant, composé de deux jambes (49, 50), entre les jambes (49, 50) duquel est disposée la roue arrière (6) en rotation, étant disposé en rotation, par le biais d'une entretoise (51) raccordant les deux jambes (49, 50) sur leur côté dirigé vers le haut, dans une tête de commande (52) intégrée dans le cadre (1) du tricycle.

12. Véhicule s'inclinant dans les virages, en particulier un tricycle, selon la revendication 11, **caractérisé en ce que** le levier de commande de direction (46) affecté à la roue arrière (6) est en liaison avec les jeux jambes (49, 50) formant le support de roue pivotant et raccordées par l'entretoise, les câbles ou la tringlerie (51).

13. Véhicule s'inclinant dans les virages, en particulier un tricycle, selon une plusieurs des revendications précédentes, **caractérisé en ce que** le support de roue recevant en rotation la roue arrière (6) se compose d'une fourche à double pont, ou d'une fourche à ressort, de préférence en forme de corps de ressort.

14. Véhicule s'inclinant dans les virages, en particulier un tricycle, selon une ou plusieurs des revendications précédentes, **caractérisé en ce que,** de préférence dans la zone de la coque de siège (53) du tricycle, symétriquement au cadre (1), sont disposés deux arceaux de sécurité (54, 55) raccordés au cadre qui sont essentiellement en forme de U, leur entretoise (56, 57) étant dirigée vers l'extérieur.

15. Véhicule s'inclinant dans les virages, en particulier un tricycle, selon la revendication 14, **caractérisé en ce que** le cadre (1) du tricycle possède une reprise de charge sous plancher (58) qui est de préférence disposée au-dessous de la coque de siège (53) et est en l'occurrence limitée par les arceaux de sécurité (54, 55).

16. Véhicule s'inclinant dans les virages, en particulier un tricycle, selon une ou plusieurs des revendications précédentes, **caractérisé en ce qu'**il est prévu plusieurs essieux composés essentiellement du corps d'essieu (8) mobile et pivotant en liaison avec l'axe multifonction (14), essieux qui sont disposés les uns derrière les autres et possèdent une géométrie d'essieu différant les unes des autres.

17. Véhicule s'inclinant dans les virages, en particulier un tricycle, selon une ou plusieurs des revendications précédentes, **caractérisé en ce que**, dans le cas de manivelles à pédale situées à l'avant dans le sens de la marche (10) et disposées en bas, avec leurs paliers de pédalier, la longueur de construction relativement importante du tricycle est complétée par un logement à bagages ou par un siège pour enfant derrière le conducteur et qui est disposé devant l'essieu avant du tricycle et dont le niveau est en l'occurrence à une distance relativement faible de la chaussée.
